# EUROPEAN PATENT APPLICATION

(11) **EP 4 686 586 A1**
(43) Date of publication of application: **04.02.2026**
(21) Application number: 25191863.7
(22) Date of filing: 25.07.2025
(51) Int. Cl.: B60H 1/32, B60H 1/00

(54) **MANIFOLD**

(30) Priority: 31.07.2024 JP 2024124511; 27.05.2025 JP 2025088092
(71) Applicant: AISIN CORPORATION, Aichi 448-8650 (JP)
(72) Inventor: SASAKI, Yu, Aichi, 448-8650 (JP); NAKAJIMA, Takuya, Aichi, 448-8650 (JP); KURACHI, Keiichiro, Aichi, 448-8650 (JP); YAMAZAKI, Tateki, Aichi, 448-8650 (JP); NODA, Ryota, Aichi, 448-8650 (JP)
(74) Representative: Kramer Barske Schmidtchen Patentanwälte PartG mbB

(57) **Abstract**

A manifold (10) through which a refrigerant (F1) flows in a channel (L) formed inside the manifold (10), the manifold (10) including a housing (11) in which a plurality of bottomed holes (12a, 12b, 12c, 12d, 12e) serving as the channel (L) are formed, and open ends (12a1, 12b1, 12c1, 12d1, 12e1) of the bottomed holes (12a, 12b, 12c, 12d, 12e) are positioned on a side surface (11a) of the housing (11), and a heat exchanger (3, 5) that is attached to the housing (11) and allows the refrigerant (F1) flowing through the channel (L) to exchange heat, in which the heat exchanger (3, 5) includes a refrigerant inflow port (3a, 5a) into which the refrigerant (F1) flows from the channel (L), a refrigerant outflow port (3b, 5b) from which the refrigerant (F1) subjected to heat exchange flows out to the channel (L), a coolant inflow port (3c, 5c) into which a coolant subjected to heat exchange with the refrigerant (F1) flows, and a coolant outflow port (3d, 5d) from which the coolant subjected to heat exchange flows out, the refrigerant outflow port (3b, 5b) is disposed closer to the refrigerant inflow port (3a, 5a) than the coolant inflow port (3c, 5c) and the coolant outflow port (3d, 5d), and the coolant outflow port (3d, 5d) is disposed closer to the coolant inflow port (3c, 5c) than the refrigerant inflow port (3a, 5a) and the refrigerant outflow port (3b, 5b), the open end (12a1, 12c1) of at least one the bottomed hole (12a, 12c) among a plurality of the bottomed holes (12a, 12b, 12c, 12d, 12e) is closed by a first device (VE1, VE2) that controls flow of the refrigerant (F1), and the open end (12a1, 12c1) of the bottomed hole (12a, 12c), the open end (12a1, 12c1) being closed by the first device (VE1, VE2), is positioned closer to the refrigerant inflow port (3a, 5a) and the refrigerant outflow port (3b, 5b) than the coolant inflow port (3c, 5c) and the coolant outflow port (3d, 5d).

## Description

### TECHNICAL FIELD

This disclosure relates to a manifold.

### BACKGROUND DISCUSSION

In recent years, automobiles (hybrid electric vehicle (HEV), plug-in hybrid electric vehicle (PHEV), battery electric vehicle (BEV), fuel-cell electric vehicle (FCEV), and the like) including a motor as a traveling drive source have been widely used. These automobiles include a battery for driving motors. In these automobiles, there are many devices, such as the motors (including an internal combustion engine such as an engine), a battery, an air conditioner, and an ECU, that require cooling. Therefore, a cooling circuit that circulates cooling water or a refrigerant is included to cool these devices. However, these devices may have different appropriate operating temperatures. In such a case, in order to change temperature of the cooling water or refrigerant to circulate for each device having a different operating temperature, heat is exchanged through a heat exchanger, such as a chiller or a water-cooled condenser, to control the temperature of the cooling water or the refrigerant. At this time, in order to control flow of the cooling water and the refrigerant by aggregating channels of the cooling water and the refrigerant, a manifold may be used in which auxiliaries, such as the heat exchanger, a valve, a pump, and a sensor, are mounted on a housing and integrated. A channel through which the cooling water or the refrigerant flows is formed in the housing.

A manifold disclosed in JP 2024-033848 A includes a housing, and auxiliaries including a water-cooled condenser attached to the housing, an evaporator, a chiller, an accumulator, a plurality of check valves, a plurality of on-off valves, and a plurality of expansion valves. The channel through which refrigerant flows is formed in the housing of the manifold.

The housing of the manifold disclosed in JP 2024-033848 A is formed of a metal material having high thermal conductivity. The channel through which the refrigerant flows is formed by forming a groove or hole in a housing body of the housing and joining a lid so as to close the groove. However, it is technically difficult to join the housing body and the lid. Therefore, as an alternative, there is conceivable a method for forming a refrigerant channel by forming a hole from a side surface of the housing with a drill or the like.

However, in a case where a hole is formed from a side surface of the housing to form the channel, it is necessary to close an inlet of the hole with a plug or the like to prevent leakage of the refrigerant. Therefore, the number of steps for assembling the manifold may increase, leading to an increase in cost. In addition, because merely linear holes can be formed by using a drill or the like, flexibility in a form of the channel is low. Therefore, it is difficult to form a complicated channel in the housing, and if such a channel is forcibly formed, the number of holes increases, and a volume of the housing may increase by closing an inlet of each hole with a plug or the like. Moreover, the increase in the number of holes formed in the housing may lead to a degrade in accuracy due to insufficient rigidity of the housing.

In addition, in a case where a housing made of a metal material is formed by a die-casting method, pilot holes may be formed with a mold during die casting, in order to improve accuracy of processing holes with a drill or the like after die casting. In that case, from a viewpoint of cost, it is preferable not to dispose mold parts for forming pilot holes on a mold side surface on which a gate for pouring molten metal is disposed. Therefore, positions at which the holes are formed may be limited. In this case, if the holes are long or have a complicated shape, pressure loss of the refrigerant may increase when the refrigerant flows through the channel. Thus, conventional manifolds have room for further improvement.

Therefore, there is a demand for a manifold having a housing that is able to reduce pressure loss of a refrigerant flowing through a channel.

### SUMMARY

One embodiment of a manifold according to this disclosure is a manifold through which a refrigerant flows in a channel formed inside the manifold, the manifold including a housing in which a plurality of bottomed holes serving as the channel are formed, and open ends of the bottomed holes are positioned on a side surface of the housing, and a heat exchanger that is attached to the housing and allows the refrigerant flowing through the channel to exchange heat, in which the heat exchanger includes a refrigerant inflow port into which the refrigerant flows from the channel, a refrigerant outflow port from which the refrigerant subjected to heat exchange flows out to the channel, a coolant inflow port into which a coolant subjected to heat exchange with the refrigerant flows, and a coolant outflow port from which the coolant subjected to heat exchange flows out, the refrigerant outflow port is disposed closer to the refrigerant inflow port than the coolant inflow port and the coolant outflow port, and the coolant outflow port is disposed closer to the coolant inflow port than the refrigerant inflow port and the refrigerant outflow port, the open end of at least one the bottomed hole among a plurality of the bottomed holes is closed by a first device that controls flow of the refrigerant, and the open end of the bottomed hole, the open end being closed by the first device, is positioned closer to the refrigerant inflow port and the refrigerant outflow port than the coolant inflow port and the coolant outflow port.

According to the present embodiment, the manifold includes the heat exchanger having the refrigerant inflow port, the refrigerant outflow port, the coolant inflow port, and the coolant outflow port. An open end of at least one of the plurality of bottomed holes formed in the housing is closed by the first device that controls flow of the refrigerant. An open end of the bottomed hole closed by the first device is positioned closer to the refrigerant inflow port and the refrigerant outflow port than the coolant inflow port and the coolant outflow port. Thus, among the plurality of bottomed holes that constitute the channel, bottomed holes of which open end is closed by the first device can be arranged on one side of the housing in a concentrated manner, by which a distance between the heat exchanger and the first device is shortened, and therefore pressure loss of the refrigerant flowing through the channel can be reduced.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a circuit configuration diagram showing a refrigerant circuit having a manifold according to the present embodiment;
Fig. 2 is a plan view showing a configuration of a housing of the manifold in planar view; and
Fig. 3 is a circuit configuration diagram of the refrigerant circuit, including a plan view showing a configuration of the manifold in planar view.

### DETAILED DESCRIPTION

Hereinafter, an embodiment of a manifold according to this disclosure will be described in detail with reference to the drawings. Note that the embodiments described below are examples for describing the manifold, and the manifold is not limited only to these embodiments. Therefore, the manifold according to this disclosure can be implemented in various forms without departing from the gist thereof.

### [Configuration of refrigerant circuit]

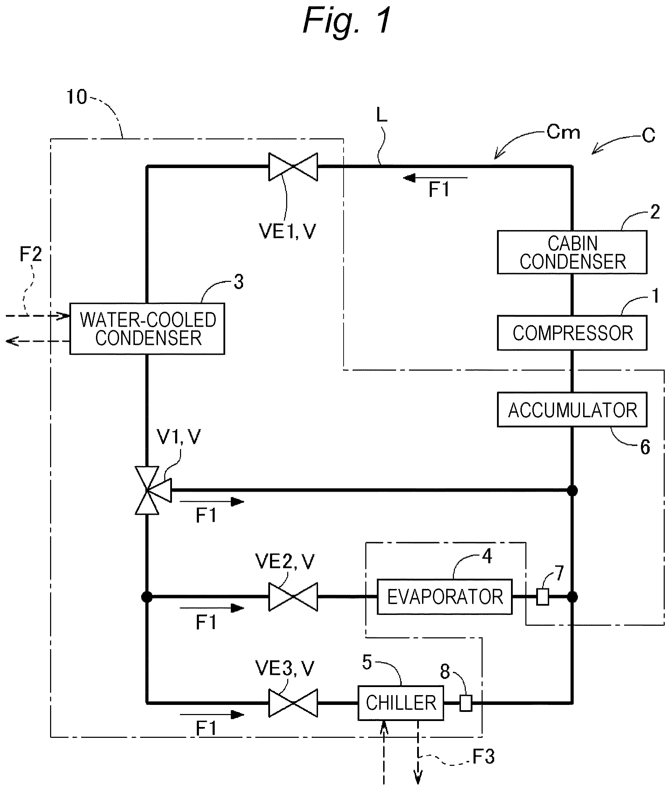

First, with reference to Fig. 1, a refrigerant circuit C mounted on an automobile (Hybrid electric vehicle (HEV), plug-in hybrid electric vehicle (PHEV), battery electric vehicle (BEV), fuel-cell electric vehicle (FCEV), or the like. Hereinafter, collectively referred to as an "electric vehicle") including a motor as a traveling drive source will be described. The refrigerant circuit C includes a refrigerant channel L (an example of a channel) through which a refrigerant F1 for cooling and heating and for adjusting temperature in an interior of the electric vehicle flows. For example, the refrigerant F1 is a refrigerant such as hydrofluorocarbon (HFC) or hydrofluoroolefin (HFO). A portion of the refrigerant channel L is provided inside a housing 11 of a manifold 10 described later. A portion surrounded by a dash-dotted line in Fig. 1 constitutes the manifold 10.

As shown in Fig. 1, the refrigerant circuit C includes a compressor 1, a cabin condenser 2, a water-cooled condenser 3 (an example of a heat exchanger and a first heat exchanger), an evaporator 4, a chiller 5 (an example of a heat exchanger and a second heat exchanger), an accumulator 6, a first temperature sensor 7, a second temperature sensor 8, and valves V. The compressor 1, the cabin condenser 2, the water-cooled condenser 3, the evaporator 4, the chiller 5, the accumulator 6, and the valves V are connected via the refrigerant channel L.

The valves V include a switching valve V1 (an example of a second device) provided between the water-cooled condenser 3 and the accumulator 6. The valves V also include a first expansion valve VE1 (an example of a first device) provided between the cabin condenser 2 and the water-cooled condenser 3, a second expansion valve VE2 (an example of the first device) provided between the water-cooled condenser 3 and the evaporator 4, and a third expansion valve VE3 (an example of a second device) provided between the water-cooled condenser 3 and the chiller 5.

The switching valve V1 controls (circulates or blocks) flow of the refrigerant F1 between the water-cooled condenser 3 and the accumulator 6. When the switching valve V1 is open, the refrigerant F1 flows through the compressor 1, the cabin condenser 2, the first expansion valve VE1, the water-cooled condenser 3, the switching valve V1, the accumulator 6, and the compressor 1 in this order. Hereinafter, in the refrigerant circuit C, a circuit including the compressor 1, the cabin condenser 2, the water-cooled condenser 3, the switching valve V1, and the accumulator 6 is referred to as a "main circuit Cm".

The first expansion valve VE1, the second expansion valve VE2, and the third expansion valve VE3 expand the refrigerant F1 to adjust pressure of the refrigerant F1. When the second expansion valve VE2 is open, the refrigerant F1 flows through the second expansion valve VE2 and the evaporator 4 in this order, and then flows into the main circuit Cm, between the switching valve V1 and the accumulator 6.

The third expansion valve VE3 disposed upstream of the chiller 5 is opened when temperature of a battery is adjusted. When the third expansion valve VE3 is open, the refrigerant F1 flows through the chiller 5, and then flows into the main circuit Cm, between the switching valve V1 and the accumulator 6.

For example, when temperature in a vehicle interior is raised (during a vehicle interior heating operation), the switching valve V1 is in a state of allowing the refrigerant F1 to flow through the main circuit Cm, and the second expansion valve VE2 and the third expansion valve VE3 are closed. Meanwhile, when the temperature in the vehicle interior is lowered (during a vehicle interior cooling operation), the switching valve V1 allows the refrigerant F1 to flow through the evaporator 4 and the chiller 5. At this time, the second expansion valve VE2 is open.

The compressor 1 compresses the refrigerant F1 to turn the refrigerant F1 into high-temperature and high-pressure gas. Hereinafter, the temperature of the refrigerant F1 compressed by the compressor 1 is referred to as a first temperature. The first temperature is, for example, 80 degrees to 90 degrees.

The refrigerant F1 compressed by the compressor 1 is sent to the cabin condenser 2, exchanges heat with air in the vehicle interior the during heating operation (temperature drops due to heat loss), and is sent to the water-cooled condenser 3 via the first expansion valve VE1. Through the water-cooled condenser 3, a first heating medium F2 circulating in a circuit (for example, a cooling circuit for cooling an electronic circuit or the like mounted on the electric vehicle) different from the refrigerant circuit C flows. The first heating medium F2 is cooling water such as a long life coolant (LLC), an insulating oil of paraffinic or the like,
or a refrigerant such as hydrofluorocarbon (HFC) or hydrofluoroolefin (HFO). The refrigerant F1 sent to the water-cooled condenser 3 exchanges heat with the first heating medium F2 flowing through the water-cooled condenser 3 (temperature drops due to heat loss). Hereinafter, the temperature of the refrigerant F1 after being cooled by the water-cooled condenser 3 is referred to as a second temperature. The second temperature is, for example, 15 degrees to 25 degrees.

The refrigerant F1 sent to the second expansion valve VE2 is expanded to be in a state where liquid and gas are mixed (atomized), and is sent to the evaporator 4. In the evaporator 4, the refrigerant F1 exchanges heat with air introduced from outside (increases in temperature by drawing heat) to vaporize.

The refrigerant F1 sent to the third expansion valve VE3 is expanded to be in a state where liquid and gas are mixed (atomized), and is sent to the chiller 5. Through the chiller 5, a second heating medium F3 circulating in a circuit (for example, a cooling circuit for cooling a battery or the like mounted on the electric vehicle) different from the refrigerant circuit C flows. The second heating medium F3 is cooling water such as a long-life coolant (LLC), an insulating oil of paraffinic or the like, or a refrigerant such as hydrofluorocarbon (HFC) or hydrofluoroolefin (HFO). The refrigerant F1 sent to the chiller 5 exchanges heat with the second heating medium F3 flowing through the chiller 5 (increases in temperature by drawing heat) to vaporize. Hereinafter, a temperature of the refrigerant F1 after being subjected to heat exchange in the evaporator 4 or the chiller 5 is referred to as a third temperature. The third temperature is, for example, 0 degrees to 10 degrees. The third temperature is detected by the first temperature sensor 7 disposed downstream of the evaporator 4 and the second temperature sensor 8 disposed downstream of the chiller 5.

The refrigerant F1 after being subjected to the heat exchange in the evaporator 4 is sent to the accumulator 6, and the liquid contained in the refrigerant F1 is separated. The refrigerant F1 from which the liquid has been separated returns to the compressor 1. The refrigerant F1 after being subjected to the heat exchange in the chiller 5 is sent to the accumulator 6, and the liquid contained in the refrigerant F1 is separated. The refrigerant F1 in a gaseous state and from which the liquid has been separated returns to the compressor 1.

As described above, the temperature of the refrigerant F1 circulating in the refrigerant circuit C changes. Specifically, the first temperature of the refrigerant F1 flowing from the compressor 1 to the water-cooled condenser 3 is highest, the second temperature of the refrigerant F1 flowing from the water-cooled condenser 3 to the evaporator 4 and/or the chiller 5 is second highest, and the third temperature of the refrigerant F1 flowing from the evaporator 4 and/or the chiller 5 to the compressor 1 is lowest. The temperature of the refrigerant F1 that joins the main circuit Cm from the water-cooled condenser 3 via the switching valve V1 changes between the second temperature and the third temperature (the second temperature when the temperature is the highest, and the third temperature when the temperature is the lowest), depending on an operation status such as heating or cooling.

### [Configuration of manifold]

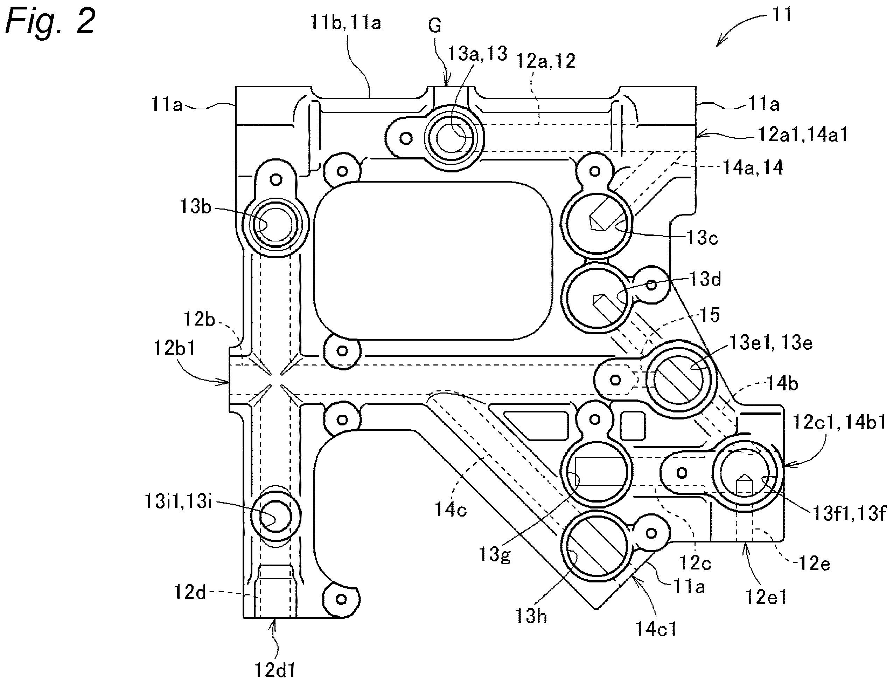

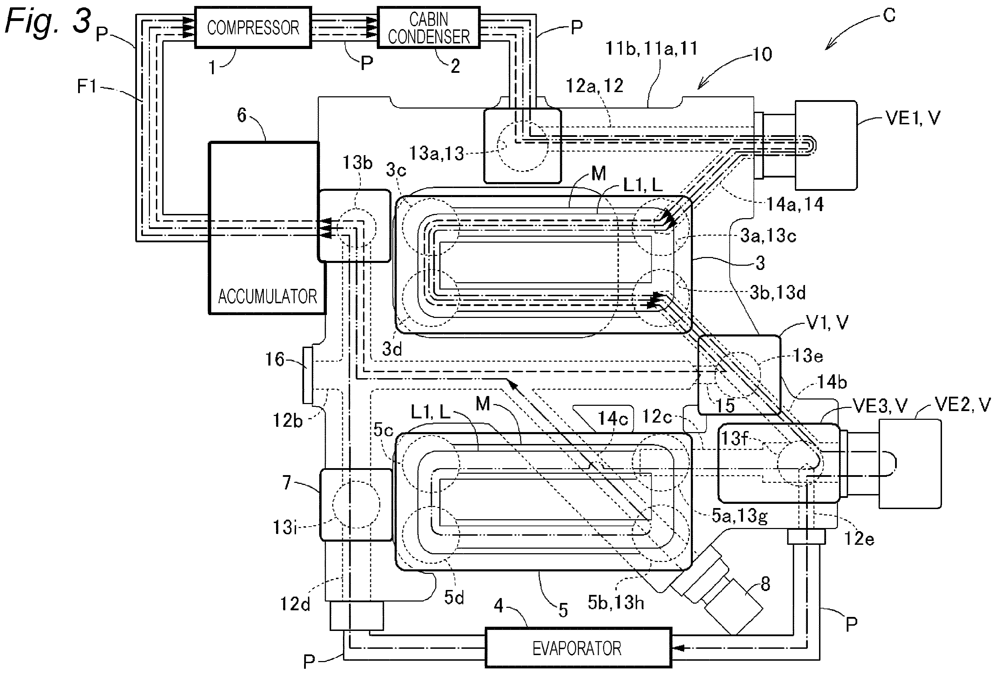

Next, a configuration of the manifold 10 provided with the portion of the refrigerant channel L will be described with reference to Figs. 2 and 3. The manifold 10 according to the present embodiment includes the water-cooled condenser 3, the chiller 5, the accumulator 6, the first temperature sensor 7, the second temperature sensor 8, the housing 11, the switching valve V1, the first expansion valve VE1, the second expansion valve VE2, and the third expansion valve VE3. Fig. 2 is a diagram showing the housing 11 of the manifold 10. Fig. 3 is a diagram showing a state in which the water-cooled condenser 3, the chiller 5, the accumulator 6, the first temperature sensor 7, the second temperature sensor 8, the switching valve V1, the first expansion valve VE1, the second expansion valve VE2, and the third expansion valve VE3 are attached to the housing 11. The manifold 10 is mounted on the electric vehicle.

Fig. 2 is a plan view showing a specific configuration of the housing 11 in planar view (as viewed in a direction perpendicular to a paper surface). As shown in Fig. 2, the housing 11 is formed by, for example, the die-casting method by using a metal material such as aluminum. The housing 11 has a shape in which a plurality of pipes arranged in parallel to the paper surface are connected and integrated. Hereinafter, in description of the housing 11, in Fig. 2, left to right parallel to the paper surface will be referred to as "horizontal", up and down parallel to the paper surface will be referred to as "vertical", an inclination inclined upward, downward, leftward, or rightward parallel to the paper surface will be referred to as "inclination", and a perpendicular to the paper surface will be referred to as "depth".

Of the refrigerant channel L, those formed in the housing 11 are bottomed holes 12 formed from a side surface 11a of the housing 11 by a drill or the like, and depth holes 13 formed by the die-casting method. Specifically, the bottomed holes 12 formed from the side surface 11a of the housing 11 include a first horizontal hole 12a (an example of a bottomed hole), a second horizontal hole 12b (an example of a bottomed hole), a third horizontal hole 12c (an example of a bottomed hole), a first vertical hole 12d (an example of a bottomed hole), and a second vertical hole 12e (an example of a bottomed hole). A bottomed hole 12 is a generic term for these holes. In a case where the bottomed hole 12 is formed in the housing 11 formed by the die-casting method, from a viewpoint of accuracy of the bottomed hole 12, it is desirable that a pilot hole is formed in advance with a mold (not shown), and then the bottomed hole 12 is linearly formed by a drill or the like along the pilot hole.

The first horizontal hole 12a, the second horizontal hole 12b, and the third horizontal hole 12c are parallel to each other in planar view, and the first vertical hole 12d and the second vertical hole 12e are parallel to each other in planar view. Each of the first horizontal hole 12a, the second horizontal hole 12b, and the third horizontal hole 12c and each of the first vertical hole 12d and the second vertical hole 12e are orthogonal to each other in planar view.

In Fig. 2, in planar view, a first inclined hole 14a (an example of an inclined hole) is formed so as to be inclined with respect to the first horizontal hole 12a and extend toward a lower left from an open end 12a1 of the first horizontal hole 12a. Furthermore, in planar view, a second inclined hole 14b (an example of an inclined hole) is formed so as to be inclined with respect to the third horizontal hole 12c and extend toward an upper left from an open end 12c1 of the third horizontal hole 12c. Moreover, in planar view, a third inclined hole 14c (an example of an inclined hole) is formed so as to be inclined with respect to the second horizontal hole 12b and extend to the upper left from the side surface 11a of the housing 11 toward the second horizontal hole 12b. Hereinafter, the first inclined hole 14a, the second inclined hole 14b, and the third inclined hole 14c are collectively referred to as an inclined hole 14. The inclined hole 14 is linearly formed by a drill or the like. The "open end" is an end opposite to a bottom of a hole, and means an inlet of the hole. For example, the open end 12a1 of the first horizontal hole 12a is a rightmost portion of the first horizontal hole 12a shown in Fig. 2. The meaning of the "open end" is similar for other holes.

The depth holes 13 formed in a depth direction from an upper surface (surface shown in Fig. 2) of the housing 11 are formed with a mold by the die-casting method. Specifically, the depth holes 13 are a first depth hole 13a, a second depth hole 13b, a third depth hole 13c, a fourth depth hole 13d, a fifth depth hole 13e, a sixth depth hole 13f, a seventh depth hole 13g, an eighth depth hole 13h, and a ninth depth hole 13i. A depth hole 13 is a generic term for these holes.

The bottomed holes 12 and the inclined holes 14, and the depth holes 13 are connected to each other. Specifically, vicinity of a bottom of the first horizontal hole 12a and the first depth hole 13a are connected. Vicinity of a bottom of the third horizontal hole 12c and the seventh depth hole 13g are connected. Vicinity of the open end 12c1 of the third horizontal hole 12c and the sixth depth hole 13f are connected. Vicinity of a bottom of the first vertical hole 12d and the second depth hole 13b are connected. Vicinity of an open end 12d1 of the first vertical hole 12d and the ninth depth hole 13i are connected. Vicinity of a bottom of the second vertical hole 12e and the sixth depth hole 13f are connected. Vicinity of a bottom of the first inclined hole 14a and the third depth hole 13c are connected. Vicinity of a bottom of the second inclined hole 14b and the fourth depth hole 13d are connected. A middle of the second inclined hole 14b and the fifth depth hole 13e are connected. Vicinity of an open end 14b1 of the second inclined hole 14b and the sixth depth hole 13f are connected. Vicinity of an open end 14c1 of the third inclined hole 14c and the eighth depth hole 13h are connected. The bottom of the second horizontal hole 12b and the fifth depth hole 13e are not directly connected to each other, but are connected via a communication hole 15 formed by a separate process after the die casting.

A bottom of the third inclined hole 14c is connected to a middle of the second horizontal hole 12b. That is, the third inclined hole 14c and the second horizontal hole 12b communicate with each other. Vicinity of an open end 12b1 of the second horizontal hole 12b is connected to a middle of the first vertical hole 12d. That is, the second horizontal hole 12b
and the first vertical hole 12d communicate with each other. The second horizontal hole 12b and the second inclined hole 14b communicate with each other via the fifth depth hole 13e and the communication hole 15.

As shown in Fig. 2, the open end 12a1 of the first horizontal hole 12a and an open end 14a1 of the first inclined hole 14a are at the same point. That is, the first horizontal hole 12a and the first inclined hole 14a branch from a common point. The open end 12c1 of the third horizontal hole 12c, the open end 14b1 of the second inclined hole 14b, and a bottom of the sixth depth hole 13f are at the same point. The second vertical hole 12e is connected to the point. That is, the third horizontal hole 12c, the second vertical hole 12e, the second inclined hole 14b, and the sixth depth hole 13f branch from a common point.

Fig. 3 shows the refrigerant circuit C including a plan view showing a specific configuration of the manifold 10 in planar view (as viewed in a direction along a direction in which the depth hole 13 extends). As described above, in the manifold 10, the water-cooled condenser 3, the chiller 5, the accumulator 6, the first temperature sensor 7, the second temperature sensor 8, the switching valve V1, the first expansion valve VE1, the second expansion valve VE2, and the third expansion valve VE3 are attached to the housing 11. Among the auxiliaries that constitute the refrigerant circuit C, the compressor 1, the cabin condenser 2, and the evaporator 4 are attached to points separated from the manifold 10, and the compressor 1, the cabin condenser 2, and the evaporator 4 are connected to the manifold 10 via a pipe P. The refrigerant F1 flows through the pipe P. That is, the pipe P constitutes a portion of the refrigerant channel L other than the bottomed holes 12, the depth holes 13, and the inclined holes 14.

Flows of the refrigerant F1 shown in Fig. 3 will be described. In Fig. 3, the flows of the refrigerant F1 are indicated by a broken line, a dash-dotted line, and a dash-dot-dot line. The broken line represents the refrigerant F1 flowing through the main circuit Cm shown in Fig. 1. The dash-dotted line represents the refrigerant F1 circulating from the compressor 1 shown in Fig. 1 via the second expansion valve VE2 and evaporator 4 to the compressor 1. The dash-dot-dot line represents the refrigerant F1 circulating from the compressor 1 shown in Fig. 1 via the third expansion valve VE3 and chiller 5 to the compressor 1.

A specific configuration of the manifold 10 will be described with reference to Figs. 2 and 3. The switching valve V1 shown in Fig. 3 is attached to an open end 13e1 of the fifth depth hole 13e (refer to Fig. 2), and closes the fifth depth hole 13e. The first expansion valve VE1 is attached to the open end 12a1 of the first horizontal hole 12a, and closes the first horizontal hole 12a and the first inclined hole 14a. That is, a plurality of holes (two holes that are the first horizontal hole 12a and the first inclined hole 14a in the present embodiment) have the open end 12a1 in common. The second expansion valve VE2 is attached to the open end 12c1 of the third horizontal hole 12c, and closes the third horizontal hole 12c and the second inclined hole 14b. That is, a plurality of holes (two holes that are the third horizontal hole 12c and the second inclined hole 14b in the present embodiment) have the open end 12c1 in common. The third expansion valve VE3 is attached to an open end 13f1 of the sixth depth hole 13f and closes the sixth depth hole 13f. The first temperature sensor 7 is attached to an open end 13i1 of the ninth depth hole 13i and closes the ninth depth hole 13i. The second temperature sensor 8 is attached to the open end 14c1 of the third inclined hole 14c and closes the third inclined hole 14c. In this manner, the open ends of the bottomed holes 12, the depth holes 13, and the inclined holes 14 are closed by the switching valve V1, the first expansion valve VE1, the second expansion valve VE2, the third expansion valve VE3, the first temperature sensor 7, and the second temperature sensor 8, by which leakage of the refrigerant F1 flowing through the refrigerant channel L to the outside is prevented.

The second expansion valve VE2 is disposed at the open end 14b1 of the second inclined hole 14b. The third expansion valve VE3 is disposed in the sixth depth hole 13f connected to the second inclined hole 14b, in vicinity of the open end 14b1 of the second inclined hole 14b. The switching valve V1 is disposed in a middle of the second inclined hole 14b. That is, the second expansion valve VE2, the third expansion valve VE3, and the switching valve V1 are all disposed along the second inclined hole 14b.

The first depth hole 13a is connected to the pipe P connected to a downstream side of the cabin condenser 2, and is closed by the pipe P. An open end 12e1 of the second vertical hole 12e is connected to the pipe P connected to an upstream side of the evaporator 4, and is closed by the pipe P. An open end 12d1 of the first vertical hole 12d is connected to the pipe P connected to a downstream side of the evaporator 4, and is closed by the pipe P. The pipe P connects a downstream side of the accumulator 6 and an upstream side of the compressor 1, and connects a downstream side of the compressor 1 and an upstream side of the cabin condenser 2. The open end 12b1 of the second horizontal hole 12b is closed by a plug 16.

The accumulator 6 is attached to the side surface 11a on a left side of the housing 11. An upstream side of the accumulator 6 is connected to the second depth hole 13b by the pipe P (not shown). That is, the second depth hole 13b is closed by the pipe P.

The water-cooled condenser 3 includes a first refrigerant inflow port 3a (an example of a refrigerant inflow port) into which the refrigerant F1 flows, a first refrigerant outflow port 3b (an example of a refrigerant outflow port) from which the refrigerant F1 flows out, a first coolant inflow port 3c (an example of a coolant inflow port) into which a coolant for exchanging heat with the refrigerant F1 flows, and a first coolant outflow port 3d (an example of a coolant outflow port) from which the coolant flows out. The water-cooled condenser 3 has a rectangular shape in planar view. As shown in Fig. 3, each of the first refrigerant inflow port 3a and the first refrigerant outflow port 3b is disposed at a right end of a main body of the water-cooled condenser 3, and each of the first coolant inflow port 3c and the first coolant outflow port 3d is disposed at a left end of the main body of the water-cooled condenser 3. That is, the first refrigerant outflow port 3b is disposed closer to the first refrigerant inflow port 3a than the first coolant inflow port 3c and the first coolant outflow port 3d. The first coolant outflow port 3d is disposed closer to the first coolant inflow port 3c than the first refrigerant inflow port 3a and the first refrigerant outflow port 3b. Thus, of the bottomed holes 12, the open end 12a1 of the first horizontal hole 12a closed by the first expansion valve VE1, the open end 12c1 of the third horizontal hole 12c closed by the second expansion valve VE2, and the open end 12e1 of the second vertical hole 12e closed by the pipe P are all positioned closer to the first refrigerant inflow port 3a and the first refrigerant outflow port 3b than the first coolant inflow port 3c and the first coolant outflow port 3d.

The water-cooled condenser 3 is attached to the housing 11, such that the first refrigerant inflow port 3a is connected to the third depth hole 13c and the first refrigerant outflow port 3b is connected to the fourth depth hole 13d. Thus, the refrigerant F1 flowing through the housing 11 can flow through inside of the water-cooled condenser 3. Each of the first coolant inflow port 3c and the first coolant outflow port 3d is connected to a pipe (not shown) through which the coolant flows, by which the coolant can flow through the water-cooled condenser 3.

In the water-cooled condenser 3, heat is exchanged between the refrigerant F1 and the coolant. As shown in Fig. 3, of the refrigerant channel L through which the refrigerant F1 flows, an in-exchanger refrigerant channel L1 disposed inside the water-cooled condenser 3 is formed in a U shape such that the refrigerant F1 flows in from the first refrigerant inflow port 3a, flows leftward, is then folded back, flows rightward, and flows out from the first refrigerant outflow port 3b. As shown in Fig. 3, an in-exchanger coolant channel M that allows the coolant to flow through the inside of the water-cooled condenser 3 is formed in a U shape such that the coolant flows in from the first coolant inflow port 3c, flows rightward, is then folded back, flows leftward, and flows out from the first coolant outflow port 3d. Thus, both the first refrigerant inflow port 3a with respect to the first coolant inflow port 3c and the first refrigerant outflow port 3b with respect to the first coolant outflow port 3d can be disposed on the same side (right side) in planar view.

The chiller 5 includes a second refrigerant inflow port 5a (an example of a refrigerant inflow port) into which the refrigerant F1 flows, a second refrigerant outflow port 5b (an example of a refrigerant outflow port) from which the refrigerant F1 flows out, a second coolant inflow port 5c (an example of a coolant inflow port) into which the coolant for exchanging heat with the refrigerant F1 flows, and a second coolant outflow port 5d (an example of a coolant outflow port) from which the coolant flows out. The chiller 5 has a rectangular shape in planar view. As shown in Fig. 3, each of the second refrigerant inflow port 5a and the second refrigerant outflow port 5b is disposed at a right end of a main body of the chiller 5, and each of the second coolant inflow port 5c and the second coolant outflow port 5d is disposed at a left end of the main body of the chiller 5. That is, the second refrigerant outflow port 5b is disposed closer to the second refrigerant inflow port 5a than the second coolant inflow port 5c and the second coolant outflow port 5d. The second coolant outflow port 5d is disposed closer to the second coolant inflow port 5c than the second refrigerant inflow port 5a and the second refrigerant outflow port 5b. Thus, of the bottomed holes 12, the open end 12a1 of the first horizontal hole 12a closed by the first expansion valve VE1, the open end 12c1 of the third horizontal hole 12c closed by the second expansion valve VE2, and the open end 12e1 of the second vertical hole 12e closed by the pipe P are all positioned closer to the second refrigerant inflow port 5a and the second refrigerant outflow port 5b than the second coolant inflow port 5c and the second coolant outflow port 5d.

The chiller 5 is attached to the housing 11, such that the second refrigerant inflow port 5a is connected to the seventh depth hole 13g and the second refrigerant outflow port 5b is connected to the eighth depth hole 13h. Thus, the refrigerant F1 flowing through the housing 11 can flow through inside of the chiller 5. Each of the second coolant inflow port 5c and the second coolant outflow port 5d is connected to a pipe (not shown) through which the coolant flows, by which the coolant can flow through the chiller 5.

In the chiller 5, heat is exchanged between the refrigerant F1 and the coolant. As shown in Fig. 3, of the refrigerant channel L through which the refrigerant F1 flows, an in-exchanger refrigerant channel L1 disposed inside the chiller 5 is formed in a U shape such that the refrigerant F1 flows in from the second refrigerant inflow port 5a, flows leftward, is then folded back, flows rightward, and flows out from the second refrigerant outflow port 5b. As shown in Fig. 3, an in-exchanger coolant channel M that allows the coolant to flow through the inside of the chiller 5 is formed in a U shape such that the coolant flows in from the second coolant inflow port 5c, flows rightward, is then folded back, flows leftward, and flows out from the second coolant outflow port 5d. Thus, both the second refrigerant inflow port 5a with respect to the second coolant inflow port 5c and the second refrigerant outflow port 5b with respect to the second coolant outflow port 5d can be disposed on the same side (right side) in planar view.

Although a plurality of bottomed holes 12 are formed in the side surface 11a of the housing 11 of the manifold 10 according to the present embodiment, the bottomed holes 12 and the inclined holes 14 are not formed in an upper side surface 11b (an example of a gate side surface) positioned on an upper side of the side surface 11a in Fig. 2, and the open ends of the bottomed holes 12 and inclined holes 14 are not disposed on the upper side surface 11b. In a case where the housing 11 is formed by the die-casting method, it is preferable to provide a mold gate on a surface in which the bottomed holes 12 are not formed. This is because it is not necessary to dispose mold parts for forming pilot holes of the bottomed holes 12 on a mold surface in which the bottomed holes 12 are not formed, and thus, there is less limitation on providing a gate. The mold gate according to the present embodiment is provided at a portion facing the upper side surface 11b in the housing 11. In Fig. 2, of the upper side surface 11b of the housing 11, a portion corresponding to the mold gate is shown as a gate mark G.

In the manifold 10 according to the present embodiment, by using the water-cooled condenser 3 in which the refrigerant channel L is formed in a U shape, the first refrigerant inflow port 3a and the first refrigerant outflow port 3b are disposed close to one end (right end in Fig. 3). Similarly, by using the chiller 5 in which the refrigerant channel L is formed in a U shape, the second refrigerant inflow port 5a and the second refrigerant outflow port 5b are disposed close to one end (right side). Moreover, many of the bottomed holes 12 that constitute the refrigerant channel L are processed from the side surface 11a on one side (right side in Fig. 3) of the housing 11, and the depth holes 13 and the inclined holes 14 communicate with the bottomed holes 12. Thus, the refrigerant channel L of the manifold 10 can be disposed on the right side of the housing 11 in a concentrated manner, and a distance between the water-cooled condenser 3 and the first expansion valve VE1 is shortened, and a distance between the chiller 5 and the second expansion valve VE2 is shortened. As a result, pressure loss of the refrigerant F1 flowing through the refrigerant channel L can be reduced.

By disposing the switching valve V1, the first expansion valve VE1, the second expansion valve VE2, and the third expansion valve VE3 at the open ends of the bottomed holes 12 and depth holes 13 formed on the right side of the housing 11, the valves V can be disposed on one side of the housing 11 in a concentrated manner, and the open ends of the bottomed holes 12 and the depth holes 13 can be closed by the valves V. The third inclined hole 14c is closed by the second temperature sensor 8. As a result, the number of plugs 16 that close the open ends of the bottomed holes 12 and inclined holes 14 can be reduced (in the present embodiment, one plug 16 is used), by which the number of steps for assembling the manifold 10 and costs can be reduced. Moreover, lengths of the bottomed holes 12 and the inclined holes 14 can be shortened to reduce the pressure loss when the refrigerant F1 flows.

When temperature in the vehicle interior is raised in winter (during a vehicle interior heating operation), the refrigerant F1 is decreased in temperature and pressure by the first expansion valve VE1. At this time, as a length of the refrigerant channel L is shorter downstream of the compressor 1 and upstream of the first expansion valve VE1, an amount of heat of the refrigerant F1 dissipated in the refrigerant channel L before flowing into the first expansion valve VE1 decreases (the temperature of the refrigerant F1 does not significantly decrease). As the length of the refrigerant channel L is longer downstream of the first expansion valve VE1 and upstream of the compressor 1, the amount of heat that the refrigerant F1 absorbs from outside air while flowing through the refrigerant channel L increases (the temperature of the refrigerant F1 rises). As a result, operation efficiency of a heat pump can be enhanced, leading to a decrease in a cruising distance of the electric vehicle in winter.

When temperature in the vehicle interior is decreased in summer (during a vehicle interior cooling operation), the refrigerant F1 is decreased in temperature and pressure by the second expansion valve VE2 and sent to the evaporator 4. At this time, as a length of the refrigerant channel L is longer downstream of the compressor 1 and upstream of the second expansion valve VE2, an amount of heat of the refrigerant F1 dissipated in the refrigerant channel L before flowing into the second expansion valve VE2 increases (the temperature of the refrigerant F1 decreases). As the length of the refrigerant channel L is shorter downstream of the second expansion valve VE2 and upstream of the compressor 1, the amount of heat that the refrigerant F1 absorbs from outside air while flowing through the refrigerant channel L decreases (the temperature of the refrigerant F1 does not significantly rise). As a result, the operation efficiency of the heat pump can be enhanced.

### [Other embodiments]

Embodiments of this disclosure may be configured as follows in addition to the above-described embodiment (those having the same functions as those in the embodiment described above are denoted by the same numbers and reference signs as in the embodiment described above).
(1) In the manifold 10 described in the embodiment described above, the open end 12a1 of the first horizontal hole 12a and the open end 12c1 of the third horizontal hole 12c are closed by the first expansion valve VE1 and the second expansion valve VE2, respectively. However, the open end 12a1 and the open end 12c1 may be closed by a sensor, such as the first temperature sensor 7 or the second temperature sensor 8, or another auxiliary, instead of the valves V. With the configuration of the refrigerant circuit C, the open ends of arbitrary bottomed holes 12 and depth holes 13 can be closed by arbitrary auxiliaries. In this case, the arbitrary auxiliaries correspond to the first device and/or the second device.
(2) In the manifold 10 described in the embodiment described above, the second expansion valve VE2, the third expansion valve VE3, and the switching valve V1 are arranged along the second inclined hole 14b. However, at least one of the second expansion valve VE2, the third expansion valve VE3, and the switching valve V1 may be replaced with a sensor, such as the first temperature sensor 7 or the second temperature sensor 8, or another auxiliary. With the configuration of the refrigerant circuit C, arbitrary auxiliaries can be arranged along the second inclined hole 14b. With the configuration of the refrigerant circuit C, arbitrary auxiliaries can be arranged along arbitrary holes, which are the first inclined hole 14a, third inclined hole 14c, and the bottomed holes 12, other than the second inclined hole 14b. In this case, the arbitrary auxiliaries correspond to the first device and/or the second device.
(3) In the present embodiment, the housing 11 is formed by the die-casting method, but a metal lump may be cut out to form the housing 11. In this case, unlike with the die-casting method, it is not necessary to consider a gate position. Therefore, it is possible to increase flexibility in arranging the bottomed holes 12, the depth holes 13, and the inclined holes 14 that constitute the refrigerant channel L of the housing 11.
(4) In the present embodiment, the accumulator 6 is attached to the side surface 11a on the left side of the housing 11, but the accumulator 6 may be disposed away from the housing 11.

Hereinafter, the following configurations are conceived in the manifold 10 described in the embodiment described above.
<1> One aspect of a manifold (10) is a manifold (10) through which a refrigerant (F1) flows in a channel (L) formed inside the manifold (10), the manifold (10) including a housing (11) in which a plurality of bottomed holes (12a, 12b, 12c, 12d, 12e) serving as the channel (L) are formed, and open ends (12a1, 12b1, 12c1, 12d1, 12e1) of the bottomed holes (12a, 12b, 12c, 12d, 12e) are positioned on a side surface (11a) of the housing (11), and a heat exchanger (3, 5) that is attached to the housing (11) and allows the refrigerant (F1) flowing through the channel (L) to exchange heat, in which the heat exchanger (3, 5) includes a refrigerant inflow port (3a, 5a) into which the refrigerant (F1) flows from the channel (L), a refrigerant outflow port (3b, 5b) from which the refrigerant (F1) subjected to heat exchange flows out to the channel (L), a coolant inflow port (3c, 5c) into which a coolant subjected to heat exchange with the refrigerant (F1) flows, and a coolant outflow port (3d, 5d) from which the coolant subjected to heat exchange flows out, the refrigerant outflow port (3b, 5b) is disposed closer to the refrigerant inflow port (3a, 5a) than the coolant inflow port (3c, 5c) and the coolant outflow port (3d, 5d), and the coolant outflow port (3d, 5d) is disposed closer to the coolant inflow port (3c, 5c) than the refrigerant inflow port (3a, 5a) and the refrigerant outflow port (3b, 5b), the open end (12a1, 12c1) of at least one bottomed hole (12a, 12c) among a plurality of bottomed holes (12a, 12b, 12c, 12d, 12e) is closed by a first device (VE1, VE2) that controls flow of the refrigerant (F1), and the open end (12a1, 12c1) of the bottomed hole (12a, 12c), the open end (12a1, 12c1) being closed by the first device (VE1, VE2), is positioned closer to the refrigerant inflow port (3a, 5a) and the refrigerant outflow port (3b, 5b) than the coolant inflow port (3c, 5c) and the coolant outflow port (3d, 5d).
   According to the present aspect, the manifold (10) includes the heat exchanger (3, 5) having the refrigerant inflow port (3a, 5a), the refrigerant outflow port (3b, 5b), the coolant inflow port (3c, 5c), and the coolant outflow port (3d, 5d). The open end (12a1, 12c1) of at least one bottomed hole (12a, 12c) among the plurality of bottomed holes (12a, 12b, 12c, 12d, 12e) formed in the housing (11) is closed by the first device (VE1, VE2) that controls flow of the refrigerant (F1). The open end (12a1, 12c1) of the bottomed hole (12a, 12c), the open end (12a1, 12c1) being closed by the first device (VE1, VE2), is positioned closer to the refrigerant inflow port (3a, 5a) and the refrigerant outflow port (3b, 5b) than the coolant inflow port (3c, 5c) and the coolant outflow port (3d, 5d). Thus, among the plurality of bottomed holes (12a, 12b, 12c, 12d, 12e) that constitute the channel (L), the bottomed hole (12a, 12c) of which open end (12a1, 12c1) is closed by the first device (VE1, VE2) can be arranged on one side of the housing (11) in a concentrated manner, by which a distance between the heat exchanger (3, 5) and the first device (VE1, VE2) is shortened, and pressure loss of the refrigerant (F1) flowing through the channel (L) can be reduced.
<2> In the manifold (10) according to <1>, a second device (V1, VE3) different from the first device (VE1, VE2) that controls flow of the refrigerant (F1) is preferably disposed in a middle of the channel (L), and the second device (V1, VE3) is preferably positioned closer to the refrigerant inflow port (3a, 5a) and the refrigerant outflow port (3b, 5b) than the coolant inflow port (3c, 5c) and the coolant outflow port (3d, 5d).
   According to the present aspect, the second device (V1, VE3) that controls flow of the refrigerant (F1) is disposed in the middle of the channel (L), and the second device (V1, VE3) is positioned closer to the refrigerant inflow port (3a, 5a) and the refrigerant outflow port (3b, 5b) than the coolant inflow port (3c, 5c) and the coolant outflow port (3d, 5d). Therefore, the first device (VE1, VE2) and the second device (V1, VE3) are arranged on one side of the housing (11) in a concentrated manner, by which the pressure loss of the refrigerant (F1) flowing through the channel (L) can be further reduced.
<3> In the manifold (10) according to <1> or <2>, in planar view, the housing (11) is preferably formed so as to be inclined with respect to at least one bottomed hole (12a, 12c) among a plurality of bottomed holes (12a, 12b, 12c, 12d, 12e), from the open end (12a1, 12c1) of the bottomed hole (12a, 12c), and preferably includes an inclined hole (14a, 14b) serving as the channel (L).
   According to the present aspect, by forming the inclined hole (14a, 14b) from the open end (12a1, 12c1) of at least one bottomed hole (12a, 12c) among the plurality of bottomed holes (12a, 12b, 12c, 12d, 12e), the pressure loss of the refrigerant (F1) flowing through the channel (L) can be further reduced.
<4> In the manifold (10) according to <3>, three or more first devices (VE1, VE2) and/or the second devices (V1, VE3) are preferably disposed along the inclined hole (14b).
   According to the present aspect, the three or more first devices (VE1, VE2) and/or the second devices (V1, VE3) can be arranged on one side of the housing (11) in a concentrated manner along the inclined hole (14b).
<5> In the manifold (10) according to <3>, the bottomed hole (12a, 12c) and the inclined hole (14a, 14b) preferably have a common open end (12a1, 12c1).
   According to the present aspect, a plurality of holes can be closed by one first device (VE1, VE2).
<6> In the manifold (10) according to any one of <1> to <5>, the heat exchanger (3, 5) preferably includes at least a first heat exchanger (3) and a second heat exchanger (5), the first heat exchanger (3) preferably includes a first refrigerant inflow port (3a) as the refrigerant inflow port, a first refrigerant outflow port (3b) as the refrigerant outflow port, a first coolant inflow port (3c) as the coolant inflow port, and a first coolant outflow port (3d) as the coolant outflow port, the second heat exchanger (5) preferably includes a second refrigerant inflow port (5a) as the refrigerant inflow port, a second refrigerant outflow port (5b) as the refrigerant outflow port, a second coolant inflow port (5c) as the coolant inflow port, and a second coolant outflow port (5d) as the coolant outflow port, and the first refrigerant inflow port (3a) with respect to the first coolant inflow port (3c), the first refrigerant outflow port (3b) with respect to the first coolant outflow port (3d), the second refrigerant inflow port (5a) with respect to the second coolant inflow port (5c), and the second refrigerant outflow port (5b) with respect to the second coolant outflow port (5d) are preferably all disposed on the same side in planar view.
   According to the present aspect, in the first heat exchanger (3), distances between the first refrigerant inflow port (3a) and first refrigerant outflow port (3b) and the first device (VE1) can be shorter than distances between the first coolant inflow port (3c) and first coolant outflow port (3d) and the first device (VE1). Furthermore, in the second heat exchanger (5), distances between the second refrigerant inflow port (5a) and second refrigerant outflow port (5b) and the first device (VE2) can be shorter than distances between the second coolant inflow port (5c) and second coolant outflow port (5d) and the first device (VE2). Thus, the pressure loss of the refrigerant (F1) flowing through the channel (L) can be further reduced.
<7> In the manifold (10) according to any one of <1> to <6>, the first device (VE1, VE2) is preferably an expansion valve.
   According to the present aspect, because the first device (VE1, VE2) is an expansion valve, the open end (12a1, 12c1) of the bottomed hole (12a, 12c) can be closed by the expansion valve essential to a configuration of the refrigerant circuit (C), by which the number of plugs (16) for closing the open ends (12a1, 12c1) can be reduced.
<8> In the manifold (10) according to any one of <1> to <7>, the heat exchanger (3, 5) preferably includes an in-exchanger refrigerant channel (L1) connecting the refrigerant inflow port (3a, 5a) and the refrigerant outflow port (3b, 5b), and an in-exchanger coolant channel (M) connecting the coolant inflow port (3c, 5c) and the coolant outflow port (3d, 5d), and both the in-exchanger refrigerant channel (L1) and the in-exchanger coolant channel (M) preferably have a U shape in planar view.
   According to the present aspect, the in-exchanger refrigerant channel (L1) has a U shape in planar view, and the in-exchanger coolant channel (M) has a U shape in planar view. Thus, the first refrigerant inflow port (3a) with respect to the first coolant inflow port (3c), the first refrigerant outflow port (3b) with respect to the first coolant outflow port (3d), the second refrigerant inflow port (5a) with respect to the second coolant inflow port (5c), and the second refrigerant outflow port (5b) with respect to the second coolant outflow port (5d) can all be disposed on the same side in planar view.
<9> In the manifold (10) according to <3>, the housing (11) is preferably formed by a die-casting method, the housing (11) preferably has a gate mark (G) that is a portion serving as a gate when the housing (11) is formed by the die-casting method, and neither the open ends (12a1, 12b1, 12c1, 12d1, 12e1) of the bottomed holes (12a, 12b, 12c, 12d, 12e) nor the open end (14a1, 14b1) of the inclined hole (14a, 14b) is preferably disposed on a gate side surface (11b) of the side surface (11a) of the housing (11), the gate side surface (11b) having the gate mark (G).
   According to the present aspect, because neither the open ends (12a1, 12b1, 12c1, 12d1, 12e1) of the bottomed holes (12a, 12b, 12c, 12d, 12e) nor the open end (14a1, 14b1) of the inclined hole (14a, 14b) is disposed on the gate side surface (11b) of the side surface (11a) of the housing (11), the gate side surface (11b) having the gate mark (G), it is not necessary to dispose mold parts for forming pilot holes of the bottomed holes (12a, 12b, 12c, 12d, 12e) on the gate side surface (11b), and thus, a shape or the like of the gate side surface (11b) is less likely to be limited when providing a gate.
<10> In the manifold (10) according to <3>, the bottomed holes (12a, 12b, 12c, 12d, 12e) and the inclined hole (14a, 14b) are preferably both linear in planar view.

According to the present aspect, because the bottomed holes (12a, 12b, 12c, 12d, 12e) and the inclined hole (14a, 14b) are both linear in planar view, the bottomed holes (12a, 12b, 12c, 12d, 12e) and the inclined hole (14a, 14b) can be easily formed by a drill or the like.

The technology according to this disclosure can be utilized for a manifold.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A manifold (10) through which a refrigerant (F1) flows in a channel (L) formed inside the manifold (10), the manifold (10) comprising:
a housing (11) in which a plurality of bottomed holes (12a, 12b, 12c, 12d, 12e) serving as the channel (L) are formed, and open ends (12a1, 12b1, 12c1, 12d1, 12e1) of the bottomed holes (12a, 12b, 12c, 12d, 12e) are positioned on a side surface (11a) of the housing (11); and
a heat exchanger (3, 5) that is attached to the housing (11) and allows the refrigerant (F1) flowing through the channel (L) to exchange heat, wherein
the heat exchanger (3, 5) includes a refrigerant inflow port (3a, 5a) into which the refrigerant (F1) flows from the channel (L), a refrigerant outflow port (3b, 5b) from which the refrigerant (F1) subjected to heat exchange flows out to the channel (L), a coolant inflow port (3c, 5c) into which a coolant subjected to heat exchange with the refrigerant (F1) flows, and a coolant outflow port (3d, 5d) from which the coolant subjected to heat exchange flows out,
the refrigerant outflow port (3b, 5b) is disposed closer to the refrigerant inflow port (3a, 5a) than the coolant inflow port (3c, 5c) and the coolant outflow port (3d, 5d), and the coolant outflow port (3d, 5d) is disposed closer to the coolant inflow port (3c, 5c) than the refrigerant inflow port (3a, 5a) and the refrigerant outflow port (3b, 5b),
the open end (12a1, 12c1) of at least one the bottomed hole (12a, 12c) among a plurality of the bottomed holes (12a, 12b, 12c, 12d, 12e) is closed by a first device (VE1, VE2) that controls flow of the refrigerant (F1), and
the open end (12a1, 12c1) of the bottomed hole (12a, 12c), the open end (12a1, 12c1) being closed by the first device (VE1, VE2), is positioned closer to the refrigerant inflow port (3a, 5a) and the refrigerant outflow port (3b, 5b) than the coolant inflow port (3c, 5c) and the coolant outflow port (3d, 5d).

2. The manifold (10) according to Claim 1, wherein
a second device (V1, VE3) different from the first device (VE1, VE2) that controls flow of the refrigerant (F1) is disposed in a middle of the channel (L), and
the second device (V1, VE3) is positioned closer to the refrigerant inflow port (3a, 5a) and the refrigerant outflow port (3b, 5b) than the coolant inflow port (3c, 5c) and the coolant outflow port (3d, 5d).

3. The manifold (10) according to Claim 2, wherein, in planar view, the housing (11) is formed so as to be inclined with respect to at least one the bottomed hole (12a, 12c) among a plurality of the bottomed holes (12a, 12b, 12c, 12d, 12e), from the open end (12a1, 12c1) of the bottomed hole (12a, 12c), and includes an inclined hole (14a, 14b) serving as the channel (L).

4. The manifold (10) according to Claim 3, wherein three or more the first devices (VE1, VE2) and/or the second devices (V1, VE3) are disposed along the inclined hole (14b).

5. The manifold (10) according to Claim 3 or 4, wherein the bottomed hole (12a, 12c) and the inclined hole (14a, 14b) have a common the open end (12a1, 12c1).

6. The manifold (10) according to any one of Claims 1 to 5, wherein
the heat exchanger (3, 5) includes at least a first heat exchanger (3) and a second heat exchanger (5),
the first heat exchanger (3) includes a first refrigerant inflow port (3a) as the refrigerant inflow port, a first refrigerant outflow port (3b) as the refrigerant outflow port, a first coolant inflow port (3c) as the coolant inflow port, and a first coolant outflow port (3d) as the coolant outflow port,
the second heat exchanger (5) includes a second refrigerant inflow port (5a) as the refrigerant inflow port, a second refrigerant outflow port (5b) as the refrigerant outflow port, a second coolant inflow port (5c) as the coolant inflow port, and a second coolant outflow port (5d) as the coolant outflow port, and
the first refrigerant inflow port (3a) with respect to the first coolant inflow port (3c), the first refrigerant outflow port (3b) with respect to the first coolant outflow port (3d), the second refrigerant inflow port (5a) with respect to the second coolant inflow port (5c), and the second refrigerant outflow port (5b) with respect to the second coolant outflow port (5d) are all disposed on the same side in planar view.

7. The manifold (10) according to any one of Claims 1 to 6, wherein the first device (VE1, VE2) is an expansion valve.

8. The manifold (10) according to any one of Claims 1 to 7, wherein
the heat exchanger (3, 5) includes an in-exchanger refrigerant channel (L1) connecting the refrigerant inflow port (3a, 5a) and the refrigerant outflow port (3b, 5b), and an in-exchanger coolant channel (M) connecting the coolant inflow port (3c, 5c) and the coolant outflow port (3d, 5d), and
both the in-exchanger refrigerant channel (L1) and the in-exchanger coolant channel (M) have a U shape in planar view.

9. The manifold (10) according to any one of Claims 3 to 5 or according to any one of Claims 6 to 8 when dependent on claim 3, wherein
the housing (11) is formed by a die-casting method,
the housing (11) has a gate mark (G) that is a portion serving as a gate when the housing (11) is formed by the die-casting method, and
neither the open ends (12a1, 12b1, 12c1, 12d1, 12e1) of the bottomed holes (12a, 12b, 12c, 12d, 12e) nor the open end (14a1, 14b1) of the inclined hole (14a, 14b) is disposed on a gate side surface (11b) of the side surface (11a) of the housing (11), the gate side surface (11b) having the gate mark (G).

10. The manifold (10) according to any one of Claims 3, 4, 5 and 9 or according to any one of Claims 6 to 8 when dependent on claim 3, wherein the bottomed holes (12a, 12b, 12c, 12d, 12e) and the inclined hole (14a, 14b) are both linear in planar view.
